# EUROPÄISCHE PATENTSCHRIFT

(11) **EP 2 029 271 B1**
(45) Veröffentlichungstag und Bekanntmachung des Hinweises auf die Patenterteilung: **18.11.2009**
(21) Anmeldenummer: 07725716.0
(22) Anmeldetag: 31.05.2007
(51) Int. Cl.: B01J 19/18, B01J 19/24, C08G 63/78

(54) **VERFAHREN ZUR KONTINUIERLICHEN HERSTELLUNG VON HOCHMOLEKULAREN POLYESTERN DURCH VERESTERUNG VON DICARBONSÄUREN UND/ODER UMESTERUNG VON DICARBONSÄUREN MIT DIOLEN UND/ODER DEREN MISCHUNGEN SOWIE VORRICHTUNG HIERZU**
PROCESS FOR CONTINUOUS PREPARATION OF HIGH MOLECULAR WEIGHT POLYESTERS BY ESTERIFICATION OF DICARBOXYLIC ACIDS AND/OR TRANSESTERIFICATION OF DICARBOXYLIC ACIDS WITH DIOLS AND/OR MIXTURES THEREOF AND AN APPARATUS THEREFOR
PROCÉDÉ DE FABRICATION EN CONTINU DE POLYESTERS DE POIDS MOLÉCULAIRE ÉLEVÉ PAR ESTÉRIFICATION D'ACIDES DICARBOXYLIQUES ET/OU TRANSESTÉRIFICATION D'ACIDES DICARBOXYLIQUES AVEC DES DIOLS ET/OU LEURS MÉLANGES, AINSI QU'UN DISPOSITIF ASSOCIÉ

(30) Priorität: 02.06.2006 DE 102006025942
(43) Veröffentlichungstag der Anmeldung: 04.03.2009
(73) Patentinhaber: Uhde Inventa-Fischer GmbH, 13509 Berlin (DE)
(72) Erfinder: SCHULZ VAN ENDERT, Eike, 13467 Berlin (DE)
(74) Vertreter: Pfenning, Meinig & Partner GbR
(86) Internationale Anmeldenummer: PCT/EP2007/004835
(87) Internationale Veröffentlichungsnummer: WO 2007/140925

(56) Entgegenhaltungen:
- EP-A1- 0 320 586
- EP-A1- 1 253 163
- WO-A-03/042278
- WO-A-2006/050799
- DE-A1- 10 041 595
- US-A- 3 563 710
- US-A- 5 064 935
- US-A- 5 849 849

## Beschreibung

Die vorliegende Erfindung betrifft ein Verfahren zur kontinuierlichen Herstellung von hochmolekularen Polyestern durch Veresterung von Dicarbonsäuren und/oder Umesterung von Dicarbonsäuren mit Diolen und/oder deren Mischungen in Gegenwart von Katalysatoren nach den kennzeichnenden Merkmalen des Patentanspruches 22. In Bezug auf die Polyester umfasst die Erfindung dabei z.B. Polyethylenterephthalat (PET), Polybutylenterephthalat (PBT), Polynaphthalenterephthalat (PEN), Polytrimethylenterephthalat (PTT) und/oder Polyester anderer Dicarbonsäuren und Diole einschließlich ihrer Copolymere. Die Erfindung betrifft weiterhin eine Vorrichtung zur kontinuierlichen Herstellung von hochmolekularen Polyestern umfassend mindestens einen Turmreaktor und mindestens einen Endreaktor mit den Merkmalen des Patentanspruches 1.

Aus der WO 03/042278 A1 ist bereits ein gattungsgemäßes Verfahren und eine Vorrichtung zur Herstellung der entsprechenden Polyester bekannt.

Bei diesem vorbekannten Verfahren wird in einer ersten Stufe ein niedrig thermisch belastetes Vorpolymer mittels eines Turmreaktors erzeugt, wobei dieses Vorkondensat 10 bis maximal 40 Wiederholungseinheiten (DP) aufweist. Die Nachkondensation wird bei dem vorbekannten Verfahren in flüssiger Phase, also in der Schmelzphase, durchgeführt, wobei spezielle Reaktoren verwendet werden, wie sie z.B. in der DE 44 47 422 C2 beschrieben sind. Bei diesem Reaktor, der auch als Endreaktor bezeichnet wird, handelt es sich um einen liegenden Rührkessel, der mit einem Rührwerk ausgestattet ist, dessen extrem hohe Oberflächenbildungsrate zu einer schnellen Diffusion der flüssigen Reaktionskomponente zumeist der Glykole und flüchtigen Nebenprodukte führt. Unter Einsatz derartiger Reaktoren zur Nachkondensation kann dann bei dem Verfahren des Standes der Technik ein Polymer erzeugt werden, das 80 bis maximal 150 Wiederholungseinheiten aufweist.

Die mit dem vorbekannten Verfahren gewonnen Polymere sollen insbesondere zur direkten Herstellung von Flaschengranulat und Vorformlingen sowie technischen Garnen inkl. Reifencord aus hochviskosen Schmelzphasen, der Polykondensation ohne Zwischenschaltung einer Festphasen-Nachkondensation geeignet sein. Es hat sich nun aber gezeigt, dass die mit dem vorbekannten Verfahren hergestellten Polymere in Bezug auf das Molekulargewicht, ausgedrückt in Wiederholungseinheiten (DP), insofern noch unbefriedigend sind, da es nicht in allen Fällen möglich ist, das hergestellte Polymer direkt zur Herstellung von Flaschengranulat und Vorformlingen, ohne Zwischenschaltung einer separaten und aufwändigen Nachkondensation, einzusetzen.

Aufgabe der vorliegenden Erfindung ist es deshalb, ausgehend von dem in der WO 03/042278 A1 beschriebenen Verfahren eine Weiterbildung in der Art vorzuschlagen, dass die mit dem Verfahren hergestellten Polyester ein deutlich höheres Molekulargewicht ausgedrückt in Ester-Wiederholungseinheiten (DP) aufweisen, sodass hochviskose, langkettige Polyester in einer Weise erzeugt werden, bei der die Schmelze bereits die nötigen Eigenschaften aufweist, die eine direkte Weiterverarbeitung zu Flaschen bzw. technischen Garnen erlaubt. Die herzustellenden Polyester müssen dazu auch so ausgebildet sein, dass die Nebenprodukte auf ein Mindestmaß beschränkt sind. Die Nebenprodukte, wie z.B. Acetaldehyd (AA) bilden sich mit Temperatur steigender Geschwindigkeit in Abhängigkeit von der Verweilzeit regelmäßig. Das zu entwickelnde Verfahren muss deshalb gleichzeitig gewährleisten, dass die Schmelze nach Ausgasung ohne Verzug aus dem Reaktor innerhalb weniger Sekunden ausgetragen werden kann und die Konzentration von Restgasen und die Neubildung auf Werte zwischen 1 und 10 ppm reduziert wird.

Eine weitere Aufgabe der vorliegenden Erfindung ist es, eine entsprechende Vorrichtung hierzu anzugeben.

Die Aufgabe wird in Bezug auf die Vorrichtung durch die Merkmale des Patentanspruches 1 und in Bezug auf das Verfahren durch die Merkmale des Patentanspruches 22 gelöst. Die Unteransprüche zeigen jeweils vorteilhafte Weiterbildungen auf.

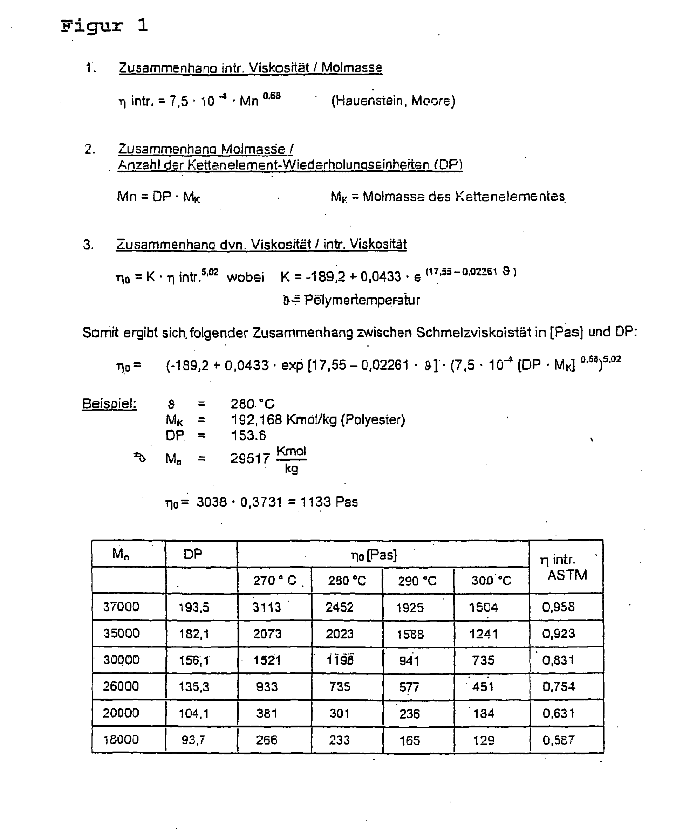

Gemäß dem erfindungsgemäßen Verfahren wird somit vorgeschlagen, dass ein Vorpolymer in dem Turmreaktor erzeugt wird, das bereits mehr als 40 bis maximal 70 Wiederholungseinheiten (DP), bevorzugt 45 bis 65, besonders bevorzugt 50 bis 60 aufweist. Dieses Vorpolymer mit dem wie vorstehend definierten Molekulargewicht ausgedrückt in Wiederholungseinheiten (DP) wird dann in einem Endreaktor zu einem Polyester mit > 150 bis 205 DP polykondensiert. Der Zusammenhang zwischen Wiederholungseinheiten DP, der Molmasse und der Viskosität ist in Figur 1 beispielhaft gezeigt.

Das Vorpolymer zeichnet sich dadurch aus, dass es innerhalb einer Gesamtreaktionszeit von 3 Stunden, bevorzugt maximal 2,5 Stunden, durch eine oberflächenaktive Ausbildung der im Turmreaktor vorhandenen Reaktionskammern bei Temperaturen von 5 bis 20 °C oberhalb des Schmelzpunktes des Vorkondensats und einem kontinuierlichen Druckabbau bereits in der Veresterung beim Übergang zum Vorkondensat erzeugt wird. Zur Zielerreichung des Verfahrens wird der Filmbereich des Turmreaktors in der Weise verbessert, dass die Fallfilmrohre eine Füllung aus strukturierter Packung, Füllkörpern, Streckmetall und/oder Leitspiralen erhalten. Diese dienen dazu, die Oberfläche zu vergrößern und die Verweildauer des Polymers geringfügig zu erhöhen. Dieses erlaubt eine noch schonendere Behandlung im Hinblick auf die Temperaturbeanspruchung, die um 5 bis 10 °C im Vergleich zum Verfahren des Standes der Technik abgesenkt werden kann und führt gleichzeitig zu höheren Oligomerkettenlängen. Der Druckabbau erfolgt so gezielt, dass sich die Kettenverlängerung des Oligomers so einstellt, dass sie sich stets unterhalb des Gleichgewichtsdruckes zur Dampfphase befindet, und zwar zwischen 400 und 5 mbar. Dadurch wird ein optimaler Reaktionsfortschritt ohne vorzeitige Verdampfung von niedermolekularen, hauptsächlich Dimeren, erreicht. Die Vorteile hinsichtlich Rohmaterialverbrauch und Betriebssicherheit liegen damit auf der Hand. Vorteilhaft ist ebenfalls die Reduzierung der Bildung von Nebenprodukten, wie z.B. Diethylenglykol, in dieser Prozessphase, insbesondere die Ausbildung von Estergruppen, die im Verlauf der Polykondensation zu Acetaldehyd(AA)-Bildung führen. Das mit dem vorstehend beschriebenen Verfahren hergestellte Vorpolymer zeichnet sich durch folgende Merkmale aus:
- Ester-Wiederholungseinheiten > 40 bis 70,
- DEG-Gehalt 0,6 bis 0,9 Gew.-%,
- COOH-Endgruppen 20 bis 40 meq/kg,
- OH-Endgruppen 60 bis 120 meq/kg,
- Vinylester-Gruppen 2 bis 3 meq/kg,
- Leichtsiedeanteil < 10 ppm.

• Insbesondere für technische Garne in der Reifenindustrie wird wegen möglicher Hydrolyse und dadurch bedingtem Festigkeitsverlust der Karkasse auf niedrige CO₂H-Gruppen unter 15 meq/kg und niedrigen DEG-Gehalt unter 1 Gew.-% Wert gelegt. Mit höheren Werten im Vorpolymer, als sie gemäß dem erfindungsgemäßen Verfahren erreicht werden, sind solche Fertigprodukte bei herkömmlichen Verfahren nicht zu realisieren. Ähnliches gilt auch für die Flaschenherstellung. Vorteilhaft sind auch dort Carboxylendgruppen-Gehalte von etwa 20 meq/kg und niedrige DEG-Gehalte, um die Stabilität und hot-fill Eigenschaften der Flaschen zu verbessern**.** Hinzu kommt ein geforderter niedriger AA-Gehalt unter 1 ppm, insbesondere für die Anwendung stiller Wasser und Babynahrung. Für solche Sonderanwendungen werden üblicherweise sog. AA-Scavenger vor den Extrusionsmaschinen dem Polymer zugefügt, die als Kostenfaktor und aus Recyclinggründen unerwünscht sind. In einem der Granulatherstellung nachgeschalteten einfachen adiabaten Diffusions-/-Temperprozess können beim erfindungsgemäßen Verfahren ohne solche Scavenger ebenfalls AA-Werte von unter 1 ppm erreicht werden. Die Temperung bei 150 bis 180 °C erfolgt ohne weitere Nachkondensation mit einem Gasstrom, durch Diffusion der geringen AA-Anteile aus dem Granulat unter Nutzung der restlichen inneren Wärmeenthalpie und gegebenenfalls geringer Wärmezufuhr zum frisch erzeugten Granulat. Solche Verfahren werden bereits seit langem zur Trocknung und Entgasung von Polyestern erfolgreich eingesetzt. Der Kristallisationsgrad verbleibt unter 45 %. Wie vorstehend dargelegt, ist es deshalb wesentlich, dass bereits das Vorkondensat den in Anspruch 22 genannten Polymerisationsgrad von > 40 bis maximal 70 DP aufweist, da ansonsten keine Endprodukte nach der Polykondensation erreicht werden können, die die gewünschten Eigenschaften aufweisen.

Als wesentliches weiteres Element ist beim erfindungsgemäßen Verfahren die Nachkondensation in der Schmelzphase zu nennen. Die Nachkondensation wird gemäß der vorliegenden Erfindung mit einem Endreaktor durchgeführt, wobei wesentlich ist, dass ein Vorpolymer, wie vorstehend beschrieben, dem Endreaktor zugeführt wird. Nur wenn ein Vorpolymer mit den vorstehend beschriebenen Eigenschaften eingesetzt wird, ist es möglich, die auch vorstehend genannten hohen Anforderungen an die Endprodukte zu erfüllen.

Der beim erfindungsgemäßen Verfahren eingesetzte Endreaktor zeichnet sich nun dadurch aus, dass der horizontal drehende Rotor mindestens einen teilweise beheizten Abschnitt aufweist. Es hat sich dabei als günstig erwiesen, wenn ein Rotor eingesetzt wird, der so aufgebaut ist, dass er über einen separaten auslassseitig angeordneten beheizten Abschnitt und einen separaten unbeheizten Abschnitt verfügt. Der beheizte Abschnitt ist dabei von seiner Dimensionierung so ausgelegt, dass er im Wesentlichen den hochviskosen Bereich abdeckt und der unbeheizte Abschnitt den niedrigviskosen. Durch diese erfindungsgemäße Ausgestaltung des Verfahrens wird nun erreicht, dass das dem Endreaktor zugeführte Vorkondensat zu einem Polykondensat mit > 150 bis maximal 205 DP, bevorzugt > 150 bis 200 DP, besonders bevorzugt > 150 bis 180 DP, kondensiert werden kann. Weiterhin bevorzugt ist es, wenn der Übergang von der gelochten zur ungelochten Korbzarge als langer Konus ausgeführt ist, da durch dessen Verdrängungswirkung eine fast sumpflose Fahrweise ermöglicht wird, wobei 70 - 90 % des Polymers zur Oberflächenbildung auf die Filmbildungsringe und den beheizten Korb gedrängt werden, wodurch die Endprodukte die gewünschten Eigenschaften erhalten.

Ein entscheidender Vorteil des erfindungsgemäßen Verfahrens ist nun darin zu sehen, dass, wenn die vorstehend beschriebenen Verfahrensparameter in Bezug auf das Vorpolymer und die Bedingungen bei der Polykondensation eingehalten werden, ein Polyester erhalten wird, der direkt weiterverarbeitet werden kann. Es hat sich dann gezeigt, dass der mit dem erfindungsgemäßen Verfahren hergestellte Polyester DEG-Gehalte unter 1 Gew.-% aufweist und dass der CO₂H-Endgruppengehalt unter 15 meq/kg liegt. Beim erfindungsgemäßen Verfahren ist es weiterhin günstig, wenn die mit dem vorstehend beschriebenen Verfahren hergestellten Polykondensate im Austragsbereich im Endreaktor bei einer Temperatur zwischen 270 und 280 °C mit einem Gasraum unter reduziertem Druck in Verbindung gehalten werden. Die Schmelze kann dann aus der Polykondensation über eine Schmelzeleitung ausgetragen und direkt granuliert oder versponnen werden. Beim erfindungsgemäßen Verfahren ist es auch möglich, dass das Granulat durch Heißabschlag hergestellt und mit einer Kristallisation unter Nutzung der Eigenwärme des Granulats und einer gleichzeitigen oder nachgeschalteten Entgasung mit einem Trocknungsgas bei einer Temperatur zwischen 150 und maximal 180 °C weiterbehandelt wird.

Als Edukte sind beim erfindungsgemäßen Verfahren bei den Diolen insbesondere Butandiol, Ethylenglykol, Propandiol und Cyclohexandimethanol und bei den Dicarbonsäuren Terephthalsäure, Naphthalinsäure, Adipinsäure und Isophthalsäure geeignet. Bei den Dicarbonsäureestern sind als Beispiele zu nennen, Dimethylterephthalat (DMT) und Naphthalinsäuredicarbonat. Geeignete Katalysatoren für das Verfahren sind Antimon-, Germanium-, Zinn- und/oder Titanmetalle oder organische Verbindungen hiervon, die auch in Form einer porösen Trägersubstanz oder als Nanopartikel eingesetzt werden können.

Die Erfindung betrifft weiterhin eine Vorrichtung zur kontinuierlichen Herstellung von hochmolekularem Polyester durch Veresterung von Dicarbonsäuren und/oder Umesterung von Dicarbonsäuren mit Diolen und/oder deren Mischungen in Gegenwart von Katalysatoren umfassend mindestens einen Turmreaktor zur Herstellung eines Vorpolymerisats und einem speziell ausgebildeten Endreaktor mit den Merkmalen des Patentanspruches 1.

Erfindungsgemäß ist somit vorgesehen, dass der zylinderförmige Rotor selbst einen mindestens teilweise beheizten Abschnitt aufweist. Durch die Ausbildung eines mindestens teilweise beheizten Abschnitts des zylinderförmigen Rotors wird erreicht, dass auch hochviskose Polymerprodukte verarbeitet werden können, ohne dass sog. "dead spots" entstehen, die zu höchstviskosen und hochkristallinen Ablagerungen führen könnten, die die Qualität des Endproduktes mindern würden.

Die Beheizung oder Kühlung des Rotors kann dabei so ausgebildet sein, dass der Rotor vollständig beheizt ist, oder aber dass der Rotor in zwei Abschnitte aufgeteilt ist, und zwar einen unbeheizten und einen auslassseitig angeordneten beheizten Abschnitt. Der beheizte Abschnitt ist dabei so ausgelegt, dass er im Wesentlichen den hochviskosen Bereich abdeckt, und der unbeheizte Abschnitt den niedrigviskosen Bereich. Je nach Polymer können deshalb ein bis zwei Drittel des horizontal angeordneten Rotors durch den auslassseitig angeordneten beheizten Abschnitt gebildet sein.

Für den Fall, dass ein durchgehend beheizter/gekühlter Rotor vorgesehen ist, ist es günstig, wenn durch geeignete Maßnahmen ein entsprechendes Temperaturgefälle ausgehend von einer niedrigen Temperatur am Einlass, d.h. im niedrigen viskosen Bereich, bis zu einer höheren Temperatur im hochviskosen Bereich am Auslass hergestellt wird.

Bevorzugt ist die Reaktorvorrichtung allerdings so aufgebaut, dass sie einen unbeheizten und einen auslassseitigen beheizten Abschnitt aufweist. Der beheizte Abschnitt befindet sich im hochviskosen Bereich und kann ein bis zwei Drittel des gesamten horizontalen Reaktors in Bezug auf die horizontale Ausdehnung umfassen.

Beim erfindungsgemäßen Reaktor wird dabei bevorzugt der unbeheizte Abschnitt durch eine Korblochzarge und der beheizte Abschnitt durch eine geschlossene Zarge gebildet. Die im hochviskosen Bereich vorgesehene geschlossene Zarge ist zudem bevorzugt mit einer Beheizung versehen, die als Doppelmantel für Wärmeträgeröle oder elektrische Strahlungsheizung ausgeführt sein kann. Der Übergang von der gelochten zur ungelochten Korbzarge wird als langer Konus ausgeführt, der den Übergang von dem mittelviskosen Sumpf - zur hochviskosen fast sumpflosen Fahrweise kennzeichnet.

Die Beheizung/Kühlung der Korbzarge bei Wahl eines flüssigen Wärmeträgers erfolgt durch die Antriebswelle mittels einer Durchführung, die innerhalb derselben mit einer Isolierung umhüllt ist. Dies vermeidet die unerwünschte Wärmeübertragung auf Lager und Abdichtungen des Rührorgans. Der Antrieb selbst wird als Aufsteckgetriebe mit Drehmomentstütze ausgeführt.

Das Verhältnis von Lochzargendurchmesser zum Reaktionsraumdurchmesser beträgt erfindungsgemäß zwischen 0,5 und 0,6 und das Verhältnis der geschlossenen Zarge zum Reaktionsraum 0,65 bis 0,75. Es hat sich weiterhin als günstig erwiesen, wenn das L/D-Verhältnis (Längenverhältnis L zum Durchmesserverhältnis D) des Reaktionsraumes 1 bis 3,5, bevorzugt 1,5 bis 3,0, besonders bevorzugt 2,5 bis 3 beträgt.

Ein weiteres Kennzeichen der vorliegenden Erfindung besteht darin, dass die ringförmigen Filmbildungselemente als rohrförmiger Kranz ausgebildet sind, wobei zwischen dem rohrförmigen Kranz und der Rotoroberfläche eine netzartige metallische Rohrstruktur mit unterschiedlicher Geometrie aufgespannt ist. Es hat sich gezeigt, dass entgegen der bisherigen Erfahrung der Aufbau der Oberflächen bildenden Ringe bei hochviskosem Polymer aus Rechteckprofilen und Speichen mit runden oder vieleckigen (z.B. Sechseck) Öffnungen eine nicht bevorzugte Lösung darstellen. Vielmehr zeigt sich, dass runde Querschnitte (Rohre) für die Tragkonstruktion die Aufnahme von Polymer und die Schlieren- und Filmbildung begünstigen, wobei die Rohrkonstruktion dreieckige und/oder rautenförmige Öffnungen freigibt, in denen der Verzug zur Filmausbildung stattfindet. Hierbei können die Öffnungen auf rohrförmigen Evolventen, die den Verbund zur Korbzarge herstellen, angeordnet sein, die dafür sorgen, dass aufgrund der Drehbewegung des Korbes stets eine Vergrößerung der Filmfläche erfolgt. Diese Anordnung hat auch den Vorteil, dass eine schonende Scherung (Ziehschnitt) an den Abstreifern stattfindet, wodurch der Energieeintrag erheblich reduziert wird.

Vorteilhaft ist ferner, dass sich auf den Rohrringen im Gegensatz zu rechteckigen Profilen keine stationären, horizontalen Flächen bilden, auf denen das Polymer länger verharren kann, wodurch es zu Qualitätsverschlechterungen kommen würde. An runden Querschnitten umschlingt das Polymer bei der Bildung von Filmen den Querschnitt so, dass die Gravitation an der Masse wirksam wird. Dadurch kommt es zu einem fortwährenden Masseaustausch und stetiger Ausbildung von besonders dünnen und stabilen Produktfilmen, die zu einer schnellen Ausdampfung von leichtflüssigen Reaktanden bzw. Lösungsmitteln führen.

Die rohrförmigen Filmbildungselemente sind dabei senkrecht zur Behälterachse auf dem Rotor angeordnet.

Wie im Stand der Technik schon bekannt, ist zwischen jedem rohrförmigen Filmbildungselementpaar ein Abstreifer vorgesehen. Bevorzugt ist es bei der erfindungsgemäßen Reaktorvorrichtung jedoch, wenn im Bereich des unbeheizten Abschnitts, d.h. im Bereich der Korblochzarge, Abstreifer (Statoren) und im Bereich des beheizten Abschnitts, d.h. im Bereich der geschlossenen Zarge, sog. Förderabstreifer und Gegenabstreifer vorgesehen sind. Der Zweck der Abstreifer/Förderabstreifer und Gegenabstreifer besteht darin, dass die durch den rohrförmigen Kranz aus dem Sumpf herausgezogene Polymermasse auf denselben begrenzt wird und es gleichzeitig vermieden wird, dass geschlossene Polymerbrücken im Zwischenraum entstehen. Bevorzugt ist deshalb eine Anordnung der Abstreifer tangential zur Unterkante des Korbes. Ein weiterer Zweck der Abstreifer/Förderabstreifer und Gegenabstreifer besteht darin, dass die sich auf der geschlossenen Zarge bildenden Wülste durch den rohrförmigen Kranz durch Schieben und von der glatten Korbzargenwand aus fließende Polymerwülste dünnschichtig austauschen, wobei die Masse im Sumpf gesammelt wird.

Die zwischen jedem Filmbildungselementpaar angeordneten Förderabstreifer und die auf der Gegenseite der Zarge angeordneten Abstreifer sorgen gleichzeitig dafür, dass die Wülste und Polymermasse, die sich auf dem Zwischenraum zwischen zwei rohrförmigen Kränzen ansammeln, durch die in Fließrichtung nächste Scheibe geschoben werden und dabei eine Selbstreinigung der Rohrringe an den Verbindungspunkten zur Zarge und gleichzeitig eine Wiederbeladung derselben bewirkt.

Die Abstreifer sind in Form von Dreiecksquerschnitten mit unterschiedlicher Anstellung einer Seite zur Horizontalen ausgeführt. Hierdurch wird die Förderwirkung erzeugt.

Ein weiteres Kennzeichen der erfindungsgemäßen Reaktorvorrichtung besteht darin, dass die beheizte Korbzarge mit geringem Abstand bis zum Reaktorenddeckel geführt wird. An der Peripherie der Korbzarge wird ein federndes umlaufendes Lamellen-Abstreifelement angeordnet, das die Verschmutzung des Enddeckels vermeidet. Der Zwischenraum kann dabei mit einem Inertgas gespült werden.

Im Bereich am Austrag ist zusätzlich bevorzugt ein mondsichelförmiger Verdränger angeordnet, der einen totraumfreien Übergang zur Pumpen-Saugöffnung gewährleistet und der dem Polymersumpf folgend in einem bestimmten Winkel angestellt wird. Zur optimalen Schlussentgasung des Polymers sind vor dem Verdränger eine oder mehrere ringförmige Filmbildungselemente vorgesehen, die in Zusammenhang mit rückfördernden Abstreifern ebenfalls eine Zuführung des Polymers zur Pumpe gewährleisten.

Bei der erfindungsgemäßen Reaktorvorrichtung ist weiterhin hervorzuheben, dass es günstig ist, wenn der Polymerauslassstutzen rechteckig ausgeführt ist, wobei die längeren Seiten rechtwinklig zur Behälterachse angeordnet sind, sodass von den Abstreifern zugeführtes Produkt eine optimale Füllung der Austragszahnradpumpe bewirkt. Der Polymerauslassstutzen ist bevorzugt ein rechteckiger Blockflansch, der in der Behälterwand einen Verbund mit dessen Heizmantel bildet, der nicht in üblicher Weise senkrecht zur Mittelachse des Behälters, sondern parallel verschoben in Drehrichtung des Korbes angeordnet ist. Hierdurch wird die stetige, vollständige Füllung der Zahnrandpumpe weiterhin gewährleistet.

Bei der erfindungsgemäßen Reaktorvorrichtung ist weiterhin auch die Anordnung des Gasvakuumrohrs (Brüdenstutzen) an einer Längsposition des Reaktors im oberen Bereich vorteilhaft. Als besonders günstig hat sich die Anordnung des Rohres kurz vor der Hochviskoszone gezeigt, z.B. nach etwa 60 % der Reaktorlänge. Zur Vermeidung von Wirbeln des Gasstromes an der Übergangsstelle zum Rohr ist eine Übergangsreduzierung im Querschnittsverhältnis 2 bis 3:1 bevorzugt, wobei eine Neigung von der oberen Behältermittelinie von 10° bis 30° in Drehrichtung des Korbes besonders günstig ist. Es kann auch ein weiteres Brüdenrohr im 1. Drittel des Gehäuses vorgesehen werden, um die Hauptmasse des Lösungsmittels oder Reaktionsgases vorteilhaft vor dem Hochviskosteil des Reaktors zu entfernen.

Die erfindungsgemäße Vorrichtung zur Polykondensation von Polyestern zeichnet sich in Abwandlung zur Vorrichtung, wie sie in der WO 03/042278 A1 beschrieben ist, noch weiterhin dadurch aus, dass ein Turmreaktor vorgeschlagen wird, dessen Fallfilmrohre eine Füllung aus strukturierter Packung, Füllkörpern, Streckmetall und/oder Leitspiralen aufweisen.

Die Erfindung wird nachfolgend anhand der Figuren 1 bis 7 näher erläutert, ohne jedoch den Gegenstand der vorliegenden Erfindung hierauf einzuschränken. Hierbei zeigen:
Figur 1 den Zusammenhang zwischen Wiederholungseinheiten, Molmasse und Viskosität,
Figur 2 ein Fließbild des erfindungsgemäßen Verfahrensablaufes,
Figur 3 einen Schnitt durch den Turmreaktor,
Figur 4 einen Längsschnitt durch den Endreaktor,
Figur 5 einen Querschnitt des Endreaktors,
Figur 6 die Ausbildung der ringförmigen Filmbildungselemente des Endreaktors,
Figur 7 eine Teilansicht der Enddeckel-Konstruktion.

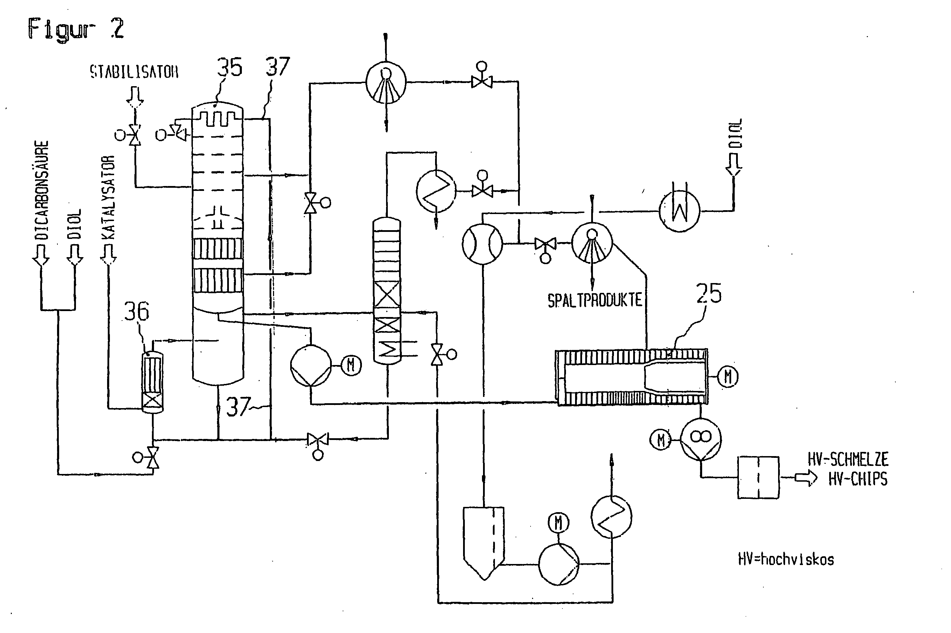

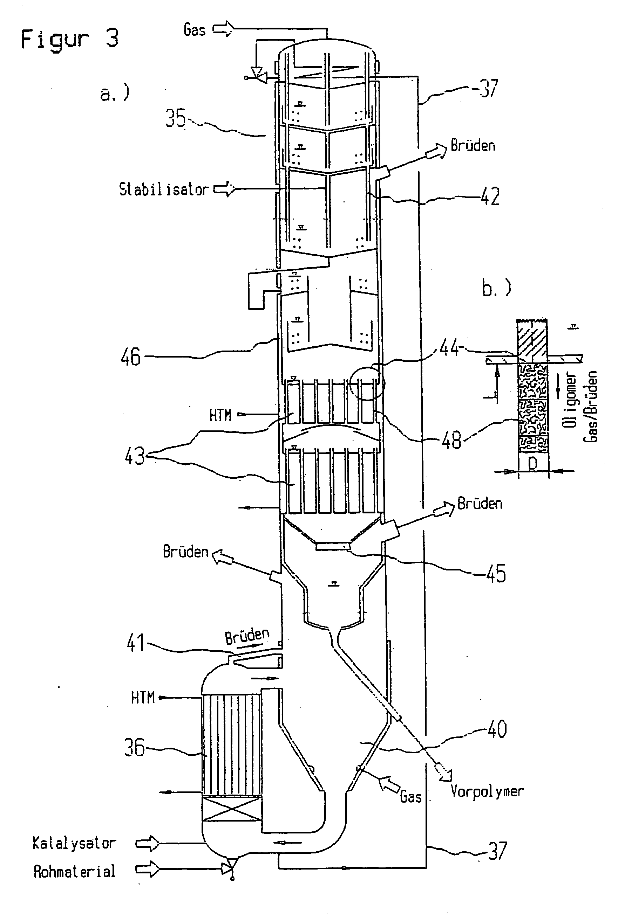

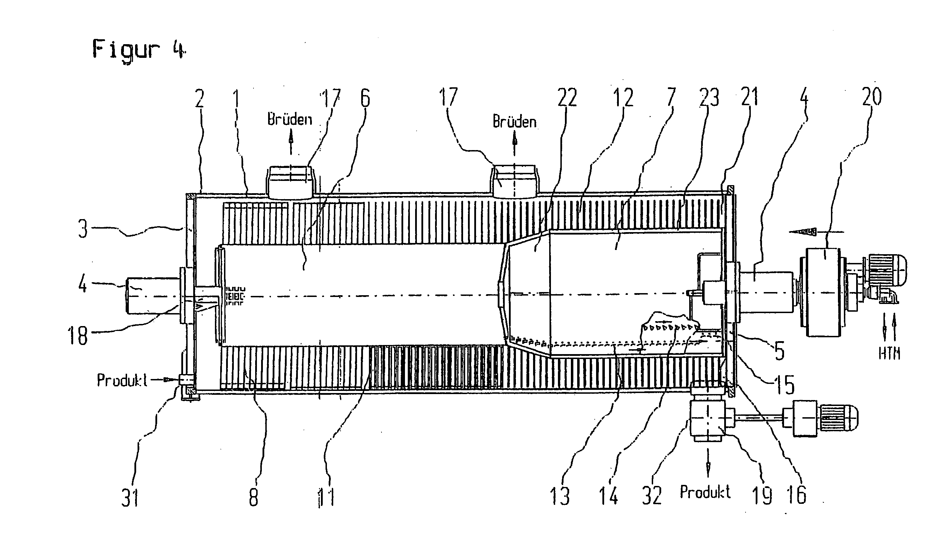

Figur 2 zeigt nun ein schematisches Fließbild des erfindungsgemäßen Verfahrens zur Herstellung der Polyester. Der Verfahrensablauf entspricht dabei im Wesentlichen dem, wie er bereits im Stand der Technik in der eingangs bereits erwähnten WO 03/042278 A1 beschrieben worden ist. Beim erfindungsgemäßen Verfahren ist wesentlich, dass im Turmreaktor 35 eine Abwandlung dahingehend vorgenommen worden ist, dass die Fallfilmzone in einer bestimmten definierten Weise ausgebildet worden ist. Die genaue Ausbildung der Fallfilmzone und der Verfahrensablauf, wie er im Turmreaktor erfolgt, ist in der nachfolgenden Figur 3 näher beschrieben. Als zweites wesentliches Element beim erfindungsgemäßen Verfahren ist der Endreaktor 25 zu nennen. Der Endreaktor 25 unterscheidet sich dabei zu den im Stand der Technik bekannten Vorrichtungen, insbesondere zur Vorrichtung, wie sie in der DE 44 47 422 C2 beschrieben ist, in der Weise, dass der Endreaktor einen drehenden Rotor aufweist, der einen mindestens teilweise beheizten Abschnitt aufweist. Dadurch in Verbindung mit der spezifischen Ausgestaltung, wie sie näher in den Figuren 4 bis 7 beschrieben ist, wird eine im Wesentlichen sumpflose Fahrweise gewährleistet, sodass letztlich Polykondensate hergestellt werden können, deren Molekulargewicht > 150 DP bis zu maximal 205 DP ist. In Bezug auf die Bedingungen, die im Endreaktor eingehalten werden, wird auf die Beschreibung der nachfolgenden Figuren 4 bis 7 verwiesen.

Fig. 3 zeigt den schematischen Aufbau des Turmreaktors 35. Nachfolgend wird der Verfahrensablauf im Turmreaktor und der Turmreaktor selbst näher beschrieben. Eine Aufschlämmung der Dicarbonsäure mit dem Diol oder der geschmolzene Dicarbonsäureester und das Diol werden im unteren Bereich eines am Turmreaktor 35 hängenden Wärmetauschers mit vorgeschaltetem Reaktionsmischer 36 unter Druck in die Reaktionsmasse eingespritzt, wobei es durch geeignete Ausführung des Einspritzstutzens zu einer optimalen Durchmischung mit dem im Unterteil befindlichen, siedenden Reaktionsprodukt kommt. Hier kann auch ein Katalysator, der für einige Polyesterreaktionen vorteilhaft ist, eingespeist werden. Der Wärmetauscher sorgt für die Aufwärmung des Gemisches auf Reaktionssiedetemperatur. Das siedende Reaktionsgemisch gelangt über eine kurze Verbindungsleitung, die tangential in einen Hydrozyklon 40 mündet zur weiteren Reaktion. Zur schnellen Reaktionsgasabfuhr aus der Reaktionsmasse wird der Hauptteil dieser Gase über eine gesonderte Leitung, einen Dampfkamin 41, aus dem Wärmetauscher in den Gasraum des Zyklones geleitet.

Im Hydrozyklon 40 findet eine weitere Entgasung bei Fortsetzung der Reaktion statt. Das reagierte Produkt gelangt über eine kurze Verbindungsleitung am Fuß des Zyklons in den Wärmetauscher 36 zurück, so dass ein natürlicher Umlauf entsteht. Das gesamte Reaktionsgas wird oberhalb der Reaktionsmasse aus dem Dampfraum des Hydrozyklons 40 abgeführt.

Bei besonders empfindlichen Produkten, wie z.B. bei der Herstellung von PBT, entsteht durch Zyklisierung von Butandiol das unerwünschte Tetrahydrofuran (THF). Die Bildung wird durch Präsenz von Wasser, das beispielsweise bei der Veresterung entsteht, verstärkt.

Vorteilhaft kann in diesem Falle im unteren Bereich des Zyklones ein vorgewärmtes, ungesättigtes Schleppgas oder überhitzter Prozeßbrüden eingeleitet werden, wodurch die Entfernung von, insbesondere Wasser, Methanol, Acetaldehyd oder Tetrahydrofuran aus der Reaktionsmasse beschleunigt wird.

Ein Teilstrom des entgasten Reaktionsproduktes wird aus der unteren Verbindungsleitung entnommen und mittels einem druckaufbauenden Volumenförderer in eine beheizte Druckleitung 37 gepumpt. Die Druckleitung 37 ist am Pumpenaustritt mit einer Dosierleitung für Diol ausgestattet, das über statische Mischelemente mit der Reaktionsmasse innig vermischt wird. Je nach Produkt kann hier ein Druck von bis zu 10 bar über ein Druckhalteventil eingestellt werden. Alternativ kann die Durchmischung und der Druck auch durch eine spezielle Mischpumpe erzeugt werden.

Durch die Einbringung des Diols unter Druck wird eine spontane Umsetzung mit den Carboxyl- oder Methoxygruppen eingeleitet, die im Zeitbereich von 1 bis 5 Minuten abläuft und nach Entspannung auf atmosphärischen bzw. unteratmosphärischen Druck beendet ist. Die Reaktionszeit wird dadurch eingestellt, dass ein Teil der Druckleitung 37 in Form einer Heizwendel in der obersten Reaktionszone des Turmreaktors 35 angeordnet ist. Der Doppelmantel 46 sorgt dafür, dass die durch Entspannung abgekühlte Reaktionsmasse wieder auf Reaktionstemperatur gebracht wird.

Die entspannte Reaktionsmasse wird nun durch eine Fallstromkaskade 42 geleitet, die aus mindestens 2, vorzugsweise 4 bis 5 mit Heizwendeln bestückten Reaktionsschalen besteht, in die das Produkt zentrisch und unter der Oberfläche abgetaucht einläuft. Das Reaktionsgas wird hingegen getrennt aus der jeweils darüber liegenden Schale, mittels ebenfalls abgetauchten Rohren durch die Reaktionsmasse geleitet. Hieraus ergibt sich ein Differenzdruck, der sich vorzugsweise als Druckerniedrigung von Schale zu Schale von oben nach unten auswirkt.

Das Produkt aus der zweiten bis x-ten Schale läuft jeweils an der äußeren Wandung, die als zusätzliche Ausdampffläche wirkt, jeder Schale in einen konisch geformten Sammler, dessen Ablauf sich zentrisch am tiefsten Punkt des Konus befindet. Im Sammler befinden sich auch die Tauchrohre, die das Reaktionsgas in die nächste Schale einleiten. Die Schalen werden vorzugsweise für eine Verweilzeit von 5 bis 10 min ausgelegt, um den erwünschten Reaktionsfortschritt zu erzielen. Zur Steuerung der Reaktionstemperatur vorzugsweise einer sanften Erhöhung um 2 bis 10 °C je Schale, ist jede Schale mit Heizwendeln ausgestattet.

Aus der Anordnung ergibt sich, dass das Reaktionsgas im Gleichstrom mit dem Produktfluss geführt wird, wobei das Gas durch die Reaktionsmasse perlt und dort einerseits für eine optimale Durchmischung sorgt, andererseits wegen des Druckabfalls bei gleichzeitiger Temperaturerhöhung seine Sättigungsgrenze nicht erreicht und dadurch aufnahmefähig bleibt für sich neubildendes Reaktionsgas (Schleppeffekt). Ein weiterer wichtiger Effekt der beschriebenen Fallstromkaskade 42 ist, dass die anfänglich noch vorhandenen niedrigsiedenden kurzkettigen Oligomere des Produkts mit dem Reaktionsgas in die Reaktionsmasse zurückgeführt werden und dort weiter an der Reaktion teilnehmen. Weiter fördert die Blasenbildung durch das Einleiten des Gases in die Reaktionsmasse, durch zusätzliche Oberflächenbildung und Kontakt mit dem gasförmigen Diol die Geschwindigkeit der Reaktion.

Dieses ist beispielsweise bei Rührkaskaden nicht gegeben und verringert damit die Ausbeute und verursacht Störungen in den nachfolgenden Kondensatoren und Vakuumeinrichtungen.

Sofern zur Einmischung von zusätzlichen Additiven oder Diol erforderlich, kann in der letzten Schale ein schräg angestellter Rührer angeordnet werden, der die Dampfblasendurchmischung unterstützt.

Die Reaktionsmasse wird im Weiteren durch eine geeignete Zuführung zur erneuten Entspannung in einer hydrozyklonähnlich ausgebildeter Anordnung gebracht, die wie die vorherigen Schalen mit Heizwendeln zur Temperaturnachführung ausgestattet ist. Dieser Teil des Turmreaktors 35 wird als Fallfilmzone 43 bezeichnet. Die Gas/Flüssigtrennung erfolgt an der Oberfläche, wobei durch geeignete Schikanen sichergestellt ist, dass die Reaktionsmasse über den gezackten Außenrand der Schale gleichmäßig abläuft, unbeeinflusst von sich bildenden Reaktionsgasblasen. Die an der Peripherie ablaufende Reaktionsmasse wird auf einem Rohrboden - ebenfalls auf dessen Peripherie - aufgefangen und verteilt sich unter Zuhilfenahme von sogen. "Gassen" gleichmäßig auf dem Boden.

Der Rohrboden ist Teil eines Gerad-Rohrbündels, das gleichzeitig der Filmbildung an den inneren Rohrflächen und dem Wärmetausch dient. Jedem Rohr im Bündel ist ein Einlaufzylinder (44) zugeordnet. Dieser ist mit einer Reihe nichtaxialer, überlappender Schlitze mit einer besonders abgeglichenen Geometrie an seiner Peripherie ausgeführt. Die Geometrie ist so festgelegt, dass
- ein Mindestniveau für alle Rohre zur gleichmäßigen Flüssigkeitsverteilung eingehalten wird,
- für ein bestimmtes Viskositätsspektrum nur geringe Niveaudifferenzen auftreten,
- Durchsatzänderungen eine proportionale Niveauänderung bewirken und die innere Rohrfläche über die gesamte Rohrlänge gleichmäßig benetzt wird,
- die obere Kante der Einlaufzylinder 43 als Not-überlauf dient und mit einer gezackten Krone ausgerüstet ist.

Der Rohrdurchmesser wird so gewählt, dass er größer als die größtmöglich entstehende Reaktionsgasblase ist. Erfindungsgemäß sind nun die Rohre mit einer strukturierten Packung, Füllkörpern, Wendeln oder Streckmetall gefüllt, sodass sich eine geringfügig erhöhte Reaktionszeit ergibt, die zur Erhöhung des Molekulargewichts beiträgt (siehe Figur 3b). Der Reaktionsdampf wird im Gleichstrom mit dem herablaufenden Produktfilm geführt. Das Verhältnis Rohrlänge zu Rohrdurchmesser soll zwischen 10 und 30 liegen und die Oberfläche der Fallfilmrohre muss der Benetzbarkeit des Produktes angepasst sein. Das Produkt tritt als Film und/oder Strähnen an der Unterseite der Fallfilmrohre aus, wird durch konische Sammlerbleche, die den Gasstrom hindurchlassen, zusammengeführt und einer zweiten Fallfilmreaktionszone an der Peripherie zugeführt. Diese ist prinzipiell gleich gestaltet wie die erste Zone, berücksichtigt aber die erhöhten Viskositäten durch entsprechende Maßnahmen an den Einlaufzylindern 44, Verteilung der Rohre und Länge des Moduls.

Unterhalb des Moduls befindet sich eine Vorrichtung zur Zusammenführung der Schmelze, die im Zentrum ein Zentralrohr für die Durchführung der Reaktionsgase und das Produkt enthält. Das an der Vorrichtung vorzugsweise an der Wandung, ablaufende Produkt wird durch eine Spoilereinrichtung 45 vom Gasstrom getrennt, der umgelenkt und im Gasraum des integrierten Vorpolymersammlers abgeführt wird. Das gesammelte Vorpolymer wird nach einer Beruhigunqs- und Nachreaktionszeit von 5 bis 15 Minuten über ein zentrales Rohr aus dem Sammler ausgetragen und kann nun einer Weiterbehandlung, z.B. einer Granulierung mit nachfolgender Festphasennachkondensation oder einer Schmelzphasennachkondensation unterzogen werden. Für bestimmte Produkte ist die Möglichkeit vorgesehen, einen Teilstrom des Vorpolymers in das untere Fallfilmmodul zurückzuführen und mit dem Vorprodukt aus dem oberen Fallfilmmodul zu mischen, so dass auf einfache Weise die Reaktionszeit vorteilhaft verlängert werden kann.

Die Außenhülle des Reaktors ist mit einem Heizmantel 46 ausgestattet, der vorzugsweise für die Beheizung als aktive Isolation, mit einem synthetischen Wärmeträgerdampf vorgesehen ist. Das für die Reaktion erforderliche Temperaturprofil wird mit Hilfe der inneren Heizflächen zonenweise im Wesentlichen mit einem flüssigen Wärmeträgeröl erzeugt. Die Reaktionsgase aus den verschiedenen Zonen werden durch übliche Einrichtungen, wie Kondensatoren, Kolonnen und Vakuumsystemen abgeführt, wobei im Wesentlichen das Diol mit geringen Oligomeranteilen in den Prozess zurückgeführt wird.

Figur 4 zeigt im Längsschnitt eine Ausführungsform einer erfindungsgemäßen Reaktorvorrichtung 25. Die Reaktorvorrichtung 25 besteht aus einem Reaktorgehäuse 1, das einen beheizten Doppelmantel 2 aufweist.
Das Reaktorgehäuse ist einlassseitig mit einem Deckel mit Heizmantel 3 und auslassseitig mit einem Enddeckel 5 mit Schweißlippe versehen. In dem Reaktor 25 sind dabei über Lagervorrichtungen und Vakuumabdichtungsmodule 4 mittels über die die Deckel 3, 5 bildenden Stirnwände des Reaktorgehäuses 1 herausreichende Stummelwellen-Anordnungen, ein drehender Korb-Rotor horizontal gelagert. Bei der Ausführungsform nach der Figur 4 ist dabei der horizontal gelagerte drehende Rotor durch eine gelochte Rührkorbzarge 6 und eine geschlossene beheizte Rührkorbzarge 7 gebildet, wobei der Übergang von der gelochten zur ungelochten Korbzarge als langer Konus 22 ausgeführt ist. Der Vorteil der erfindungsgemäßen Ausbildung des Rotors in Form eines beheizten Abschnittes als geschlossene Zarge 7 und des unbeheizten Abschnittes als Korblochzarge 6 besteht nun darin, dass eine einfache Fahrweise auch von hochviskosen Polymerprodukten möglich wird und wobei gleichzeitig hohe Molekulargewichte der herzustellenden Polymere, z.B. Polyester, realisiert werden können. Durch den Übergang von der gelochten zur ungelochten Korbzarge in Form eines langen Konuses 22 wird der Übergang von dem mittelviskosen Sumpf zur hochviskosen, fast sumpflosen Fahrweise begünstigt.

Die Beheizung der geschlossenen Rührkorbzarge 7 wird gemäß dem Ausführungsbeispiel nach Figur 4 durch einen Doppelmantel 23 realisiert.

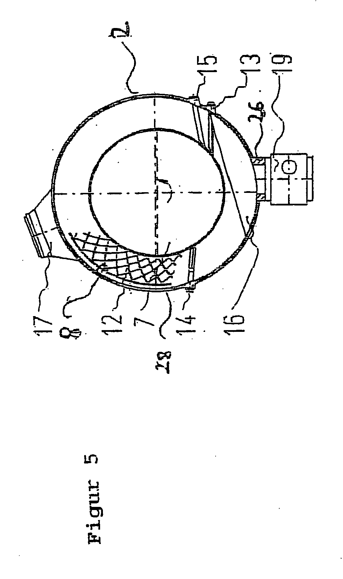

Die ringförmigen Filmbildungselemente 8, die auf dem drehbaren Rotor 6, 7 befestigt sind, sind durch einen rohrförmigen Kranz 28 und einer zwischen dem rohrförmigen Kranz 28 und der Rotoroberfläche aufgespannten netzartigen metallischen Struktur 12 gebildet. Die genaue Ausgestaltung der ringförmigen Filmbildungselemente 8 ist in Figur 5 gezeigt.

Ein weiteres Kennzeichen der erfindungsgemäßen Reaktorvorrichtung 25 besteht nun darin, dass zwischen jedem ringförmigen Filmbildungselementpaar Abstreifer, Förderabstreifer und/oder Gegenabstreifer 11, 13, 14, 15 angeordnet sind. Im Beispielsfall der Ausführungsform nach Figur 4 sind im Bereich des unbeheizten Abschnittes 6, d.h. im Bereich der gelochten Rührkorbzarge, die im Wesentlichen durch den niedrigviskosen Bereich definiert ist, Messerabstreifer 11 vorgesehen. Im Bereich des beheizten Abschnittes, der im Wesentlichen durch hochviskosen Bereich definiert ist, sind Förderabstreifer 13 mit einem Dreiecksprofil und/oder Tragflügelprofil und Gegenabstreifer 14, die ebenfalls ein Dreiecksprofil aufweisen, vorgesehen. Durch diese spezifische Ausbildung der unterschiedlichen Anordnung und Gestaltung der Abstreifer, Förderabstreifer und/oder Gegenabstreifer 11, 13, 14, 15 wird eine nahezu optimale Filmbildung und damit auch eine optimale Fahrweise erreicht. Zur weiteren Unterstützung einer optimalen Filmbildung ist es bei der Ausführungsform der Reaktorvorrichtung 25 nach Figur 1 gleichfalls noch vorgesehen, dass einlassseitig ein Wellenstummelabstreifer 18 vorgesehen ist und auslassseitig federnde Abstreifer 21. Bei der erfindungsgemäßen Reaktorvorrichtung 25 ist weiterhin zu betonen, dass durch die Anordnung der ringförmigen Filmbildungselemente 8 bis zum Enddeckel 5 eine optimale Entgasung erreicht werden kann. Damit sind Polymerendprodukte realisierbar, die niedrige Gehalte an unerwünschten Nebenprodukten aufweisen sowie insbesondere niedrige Acetaldehydgehalte im Falle von Polyestern. Die Abführung der entstehenden Gase erfolgt bei der Reaktorvorrichtung 25 über mindestens einen Brüdenstutzen 17, bevorzugt aber, wie es in Figur 4 gezeigt ist, über zwei Brüdenstutzen 17. Als weiteres Kennzeichen der erfindungsgemäßen Reaktorvorrichtung 25 ist zu nennen, dass die Austragspumpe 19 direkt in das Reaktorgehäuse 1 integriert ist. Der der Austragspumpe 19 zugeordnete Polymerauslassstutzen ist dabei bevorzugt ein rechteckiger Blockflansch, der direkt in den Heizmantel 2 integriert ist, wobei dies nicht wie üblicherweise senkrecht zur Mittelachse des Behälters erfolgt ist, sondern parallel verschoben in Drehrichtung des Korbes (siehe auch Figur 5). Dadurch wird ein möglichst vollständiges Absaugen des Produktes erreicht, da sich dieses jeweils immer in Drehrichtung des Korbes ansammelt. Zur weiteren Unterstützung ist bei der erfindungsgemäßen Reaktorvorrichtung am Enddeckel noch zusätzlich ein Enddeckel-verdränger 16 vorgesehen, sodass eine optimale Zufuhr des hochviskosen Polymers in die Austragspumpe 19 erfolgen kann. In Figur 1 ist dabei das Antriebsgetriebe bzw. der Motor für den im Gehäuse 2 angeordneten horizontalen Korb mit 20 bezeichnet.

In Figur 5 ist nun ein Querschnitt des in der Figur 4 beschriebenen Reaktors 25 gezeigt. Aus Figur 5 geht insbesondere die parallele Verschiebung, in Drehrichtung, der Austragspumpe 19 hervor und die Einbindung eines rechteckigen Blockflansches 26 in das Gehäuse 1. Aus Figur 5 geht weiterhin die Anordnung der Förderabstreifer 13 sowie Gegenabstreifer 14 jeweils mit Dreiecksprofil hervor. Mit 15 sind die Förderabstreifer im Gegenstrom bezeichnet. Figur 5 zeigt gleichfalls ausschnittsweise die Anordnung des ringförmigen Filmbildungselementes 8 auf der geschlossenen beheizten Rührkorbzarge 7. Das ringförmige Filmbildungselement 8 besteht dabei aus einem rohrförmigen Kranz 28 sowie Rohrringen mit Rohrevolventen und Rauten 12. Mit 17 ist wiederum wie in Figur 4 das Brüden- bzw. Vakuumrohr dargestellt, das Bezugszeichen 16 bezeichnet den Enddeckel-Verdränger.

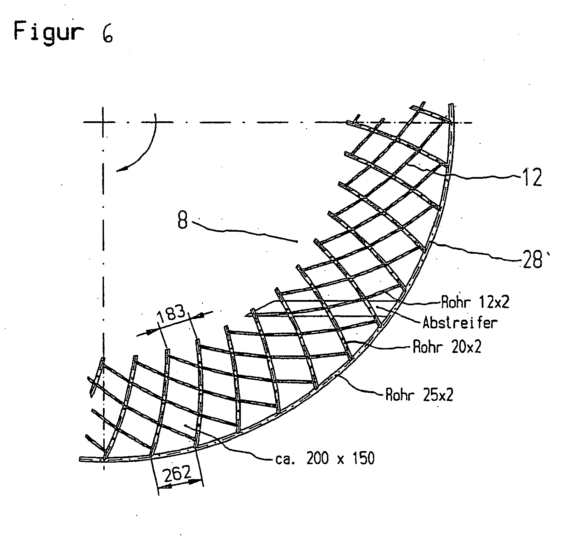

Aus Figur 6 ist nun der genaue Aufbau der ringförmigen Filmbildungselemente 8 gezeigt. In Figur 6 ist dabei das Filmbildungselement 8 ausschnittsweise ohne den Rotor dargestellt. Das ringförmige Filmbildungselement 8 besteht dabei aus einem rohrförmigen Kranz 28 sowie Rohrringen mit Rohrevolventen und Rauten 12. Es hat sich gezeigt, dass insbesondere runde Querschnitte, wie Rohre, für die Tragkonstruktion die Aufnahme von Polymer und die Schlieren- und Filmbildung begünstigen, wobei die Rohrkonstruktion, wie in Figur 6 erkenntlich, dreieckige bzw. rautenförmige Öffnungen freigibt, in denen der Verzug zur Filmbildung stattfindet. Hierbei können die Öffnungen auf rohrförmigen Evolventen, die den Verbund zur Korbzarge herstellen, angeordnet sein, die dafür sorgen, dass aufgrund der Drehbewegung des Korbes stets eine Vergrößerung der Filmfläche erfolgt. Diese Anordnung hat auch den Vorteil, dass eine schonende Scherung (Ziehschnitt) an den Abstreifern stattfindet, wodurch der Energieeintrag erheblich reduziert wird. Aus Figur 6 sind weiterhin noch die entsprechenden Abmessungen der Rohre sowie der Evolventen und dreiecksförmigen Ausschnitte gezeigt. Die Abmessungen der Evolventen bzw. Rauten wird in Abhängigkeit des herzustellenden Polymers und dessen Viskosität gewählt. Bei hochviskosen Polymeren wird eine entsprechende Vergrößerung gewählt, wohingegen bei niedrigviskosen Produkten die in Figur 6 gezeigten Abmessungen günstig sind.

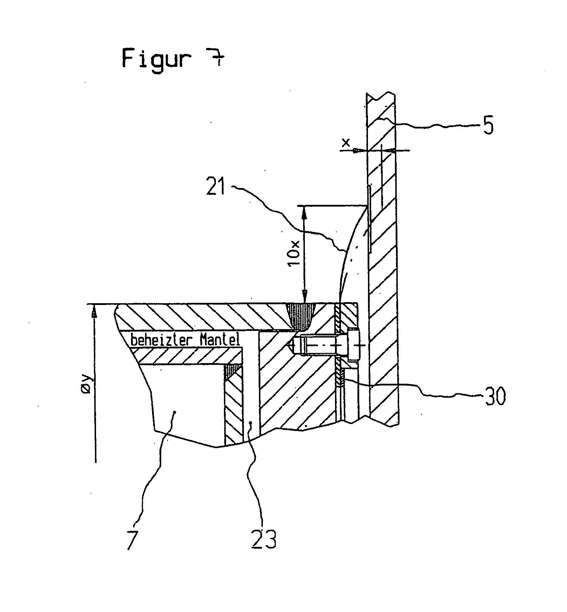

Figur 7 zeigt nun noch in vergrößerter Darstellung einen Ausschnitt aus der Enddeckelkonstruktion 5 der erfindungsgemäßen Reaktorvorrichtung 25 nach Figur 1. Wie aus Figur 7 hervorgeht, weist die Ausführungsform nach Figur 1 einen federnden Abstreifer 21 auf, der mit dem beheizten Mantel 23 der geschlossenen Korbzarge 7 z.B. über schrauben befestigt ist, zusätzlich kann noch eine Punktverschweißung 30 vorhanden sein. Der federnde Abstreifer 21, der in Form einer Lamelle ausgebildet ist, sorgt dafür, dass eine Verschmutzung des Enddeckels mit Produkt verhindert wird. Ergänzend ist noch vorgesehen, dass der durch den federnden Abstreifer 21 und durch den Enddeckel 5 begrenzte Raum mittels Inertgas gespült werden kann.

## Patentansprüche

1. Vorrichtung zur kontinuierlichen Herstellung von hochmolekularem Polyester durch Veresterung von Dicarbonsäuren und/oder Umesterung von Dicarbonsäureestern mit Diolen und/oder deren Mischungen in Gegenwart von Katalysatoren umfassend mindestens einen Turmreaktor zur Herstellung eines Vorpolymerisats und einem einen Endreaktor bildenden Polymerisationsreaktor,
**dadurch gekennzeichnet, dass** der Turmreaktor (35) wie folgt aufgebaut ist:
- im unteren Drittel ist der Turmreaktor in Form eines Hydrozyklons (40) mit anhängendem Wärmeaustauscher (36) ausgebildet und weist eine Zuführung für die Paste, Aufschlämmung und/oder das flüssige Rohstoffgemisch auf sowie einen statischen Reaktionsmischer unterhalb des Wärmetauschers,
- der Hydrozyklon (40) ist über eine Druckleitung (37) mit der Kopfseite des Turmreaktors (35) verbunden,
- Die Kopfseite des Turmreaktors (35) ist im oberen Drittel in Form einer Fallstromkaskade (42) ausgebildet,
- die Kaskade (42) steht über eine Leitung mit dem mittleren Teil des Turmreaktors in Verbindung, der in Form einer ein- oder mehrstufigen Fallfilmzone (43) mit Vorentspannung ausgebildet ist, wobei die Fallfilmzonen (43) Fallfilmrohre (48) umfassen, die eine Füllung aus strukturierter Packung, Füllkörpern, Streckmetall und/oder Leitspiralen aufweisen, dass der Endreaktor (25) ein in einem, einen Ein- und Auslass (31, 32) aufweisenden Reaktorgehäuse (1), drehenden Rotor, der über eine Lagervorrichtung (4) mittels über die Stirnwände des Reaktorgehäuses (1) herausreichende Stummelwellenanordnungen horizontal gelagert ist, aufweist und dass am Rotor ringförmige Filmbildungselemente (8) und zwischen den ringförmigen Filmbildungselementen (8) an den Innenflächen des Reaktorgehäuses Abstreifer angeordnet sind, und der zylinderförmige Rotor einen mindestens teilweise beheizten Abschnitt aufweist.

2. Vorrichtung nach Anspruch 1,
**dadurch gekennzeichnet, dass** in Richtung des Auslasses (32) ein beheizter Abschnitt und in Richtung des Einlasses (31) ein unbeheizter Abschnitt vorgesehen sind.

3. Vorrichtung nach Anspruch 1 oder 2,
**dadurch gekennzeichnet, dass** der unbeheizte Abschnitt des zylinderförmigen Rotors als Korblochzarge (6) und der beheizte Abschnitt als geschlossene Zarge (7) ausgebildet ist.

4. Vorrichtung nach mindestens einem der Ansprüche 1 bis 3,
**dadurch gekennzeichnet, dass** das Verhältnis von Lochzargendurchmesser zum Reaktionsraumdurchmesser zwischen 0,5 und 0,6 und das Verhältnis der geschlossenen Zarge zum Reaktionsraum 0,65 bis 0,75 beträgt.

5. Vorrichtung nach mindestens einem der Ansprüche 1 bis 4,
**dadurch gekennzeichnet, dass** das L/D-Verhältnis (Längenverhältnis (L) zum Durchmesserverhältnis (D)) des Reaktionsraumes 1 bis 3,5, bevorzugt 1,5 bis 3,0, besonders bevorzugt 2,5 bis 3, beträgt.

6. Vorrichtung nach mindestens einem der Ansprüche 3 bis 5,
**dadurch gekennzeichnet, dass** die geschlossene Zarge (7) einen beheizbaren Doppelmantel (23) aufweist.

7. Vorrichtung nach mindestens einem der Ansprüche 3 bis 6,
**dadurch gekennzeichnet, dass** der Übergang von der Korblochzarge (6) zur geschlossenen Zarge (7) als Konus (22) ausgeführt ist.

8. Vorrichtung nach mindestens einem der Ansprüche 1 bis, 7,
**dadurch gekennzeichnet, dass** in Bezug auf die horizontale Ausdehnung, ein bis zwei Drittel des horizontal angeordneten Rotors, durch den auslassseitig angeordneten beheizten Abschnitt gebildet sind.

9. Vorrichtung nach mindestens einem der Ansprüche 1 bis 8,
**dadurch gekennzeichnet, dass** nur im unbeheizten Abschnitt die Abstreifer (11) und im beheizten Abschnitt Förderabstreifer (13) angeordnet sind.

10. Vorrichtung nach Anspruch 9,
**dadurch gekennzeichnet, dass** die Förderabstreifer (13) zu den im Bereich des unbeheizten Abschnittes angeordneten Abstreifern (11) radial versetzt angeordnet sind.

11. Vorrichtung nach Anspruch 9 oder 10,
**dadurch gekennzeichnet, dass** im Bereich des beheizten Abschnitts zu dem Förderabstreifer (13) entgegensetzt Gegenabstreifer (14) vorgesehen sind.

12. Vorrichtung nach mindestens einem der Ansprüche 9 bis 11,
**dadurch gekennzeichnet, dass** die Förderabstreifer (13) und/oder die Gegenabstreifer (14) dreiecksförmig ausgebildet sind.

13. Vorrichtung nach mindestens einem der Ansprüche 1 bis 12,
**dadurch gekennzeichnet, dass** die ringförmigen Filmbildungselemente (8) durch einen rohrförmigen Kranz (28) und einer zwischen dem rohrförmigen Kranz (28) und der Rotoroberfläche aufgespannten netzartigen metallischen Rohrstruktur (12) gebildet ist.

14. Vorrichtung nach Anspruch 13,
**dadurch gekennzeichnet, dass** die netzartige metallische Struktur rauten- und/oder dreieckförmige Öffnungen bildet.

15. Vorrichtung nach mindestens einem der Ansprüche 1 bis 14,
**dadurch gekennzeichnet, dass** die Austragspumpe (19) unmittelbar am Reaktorgehäuse (1) angeordnet ist.

16. Vorrichtung nach Anspruch 15, **dadurch gekennzeichnet, dass** oberhalb eines rechteckigen Pumpensaugflansches Filmbindungsringe und rückwärtsfördernde Abstreifer vorgesehen sind.

17. Reaktorvorrichtung nach mindestens einem der Ansprüche 1 bis 16,
**dadurch gekennzeichnet, dass** das Reaktorgehäuse (1) einen beheizbaren Doppelmantel (2) aufweist.

18. Reaktorvorrichtung nach mindestens einem der Ansprüche 3 bis 17,
**dadurch gekennzeichnet, dass** am auslassseitigen Ende der geschlossenen Zarge (7) ein Enddeckel-Verdränger (16) vorgesehen ist.

19. Vorrichtung nach mindestens einem der Ansprüche 3 bis 18,
**dadurch gekennzeichnet, dass** bei der zwischen dem Gehäuseenddeckel (5) und der beheizten Korbzarge (7) eine aus federnden Lamellen bestehende Abdichtung (21) mit Inertgasspülung vorgesehen ist.

20. Vorrichtung nach mindestens einem der Ansprüche 1 bis 19,
**dadurch gekennzeichnet, dass** für die Reaktionsgase 1 oder 2 Brüdenrohre (17) vorgesehen sind, die mittels eines Konus mit einem Oberflächenverhältnis von 2 bis 3:1 angeschlossen sind.

21. Vorrichtung nach Anspruch 20,
**dadurch gekennzeichnet, dass** die Brüdenrohre (17) in einem Winkel von 0 bis 30° aus der vertikalen Behälterachse angeordnet sind.

22. Verfahren zur kontinuierlichen Herstellung von hochmolekularen Polyestern durch Veresterung von Dicarbonsäuren und/oder Umesterung von Dicarbonsäureestern mit Diolen und/oder deren Mischungen in Gegenwart von Katalysatoren unter Bildung eines Vorpolymers mit einer Vorrichtung nach mindestens einem der Ansprüche 1 bis 21,
**dadurch gekennzeichnet, dass** in dem Turmreaktor ein Vorpolymer mit > 40 bis 70 Wiederholungseinheiten (DP) hergestellt und dieses Vorpolymer in nur einem weiteren Reaktor zu einem Polyester mit > 150 bis 205 DP polykondensiert wird.

23. Verfahren nach Anspruch 22,
**dadurch gekennzeichnet, dass** ein Vorpolymer mit 45 bis 65 DP, bevorzugt mit 50 bis 60 DP, hergestellt wird.

24. Verfahren nach Anspruch 22 oder 23,
**dadurch gekennzeichnet, dass** ein Vorpolymer hergestellt wird, das einen Di-Diolgehalt von 0,6 bis 0,9 Gew.-% aufweist.

25. Verfahren nach mindestens einem der Ansprüche 22 bis 24,
**dadurch gekennzeichnet, dass** ein Vorpolymer hergestellt wird, das 20 bis 40 meq/kg COOH-End-gruppen und 60-120 meq/kg OH-Endgruppen aufweist.

26. Verfahren nach mindestens einem der Ansprüche 22 bis 25, **dadurch gekennzeichnet, dass** ein Vorpolymer hergestellt wird, das einen Leichtsiedeanteil < 10 ppm aufweist.

27. Verfahren nach mindestens einem der Ansprüche 22 bis 26,
**dadurch gekennzeichnet, dass** bei der Vorpolymerisation im Turmreaktor mit Temperaturen von 5 bis 20 °C, oberhalb des Schmelzpunktes der jeweiligen Zwischenprodukte, gearbeitet wird.

28. Verfahren nach mindestens einem der Ansprüche 22 bis 27,
**dadurch gekennzeichnet, dass** bis einschließlich der Vorpolykondensation eine Gesamtreaktionszeit von maximal 3 Stunden, bevorzugt 2,6 Stunden, eingehalten wird.

29. Verfahren nach mindestens einem der Ansprüche 22 bis 28,
**dadurch gekennzeichnet, dass** mit einem Turmreaktor gearbeitet wird, dessen Fallfilmrohre eine Füllung aus strukturierter Packung, Füllkörpern, Streckmetall und/oder Leitspiralen aufweisen.

30. Verfahren nach mindestens einem der Ansprüche 22 bis 29,
**dadurch gekennzeichnet, dass** ein Polyester mit > 150 bis 200 DP, bevorzugt > 150 bis 180 DP, hergestellt wird.

31. Verfahren nach mindestens einem der Ansprüche 22 bis 30,
**dadurch gekennzeichnet, dass** ein Endreaktor eingesetzt wird, der einen in einem Reaktorgehäuse, mit Ein- und Auslass, horizontal drehenden Korbrotor aufweist, wobei der Rotor mindestens einen teilweise beheizten/gekühlten Abschnitt besitzt.

32. Verfahren nach Anspruch 31,
**dadurch gekennzeichnet, dass** im Wesentlichen sumpflos gearbeitet wird, d.h. dass der Transport der Schmelze auf den oberflächenbildenden Rohrringen unter Mitwirkung von transportierenden Abstreifern erfolgt.

33. Verfahren nach mindestens einem der Ansprüche 22 bis 32,
**dadurch gekennzeichnet, dass** die Schmelze im Austragsbereich der Polykondensation im Endreaktor bei einer Temperatur von 5 bis 20 °C oberhalb des Schmelzpunktes in einem Gasraum unter reduziertem Druck behandelt wird.

34. Verfahren nach Anspruch 33,
**dadurch gekennzeichnet, dass** die Schmelze aus der Polykondensation über eine Schmelzeleitung ausgetragen und bevorzugt 1 bis 2 Minuten granuliert wird.

35. Verfahren nach Anspruch 33 oder 34,
**dadurch gekennzeichnet, dass** das Granulat durch Heißabschlag hergestellt und unter Beibehaltung der für die Kristallisation und Trocknung erforderlichen Temperatur des Granulats sowie einer Entgasung durch Diffusion mit Hilfe eines Schlepp-Gases (Luft oder Inertgas) bei einer Temperatur zwischen 150 und maximal 180 °C weiter behandelt wird.

36. Verfahren nach einem der Ansprüche 33 bis 35,
**dadurch gekennzeichnet, dass** ein Endprodukt hergestellt wird, das einen Anteil von < 1 ppm an diffusionsfähigen Leichtsiedern, einen Kristallanteil von 30 bis 45 % und mit einer der Behandlungstemperatur entsprechenden Kristallitform und Ausbildungsgröße der gauchen und trans-Strukturen in Gauss'scher Verteilung ausgestattet ist, jedoch der äußere kugelförmige Mantel eines Granulatkorns eine erhöhte trans-Struktur, also Orientierung, aufweist.

37. Verfahren nach mindestens einem der Ansprüche 22 bis 36,
**dadurch gekennzeichnet, dass** als Diol 1-Äthandiol verwendet wird.

38. Verfahren nach einem der Ansprüche 22 bis 37,
**dadurch gekennzeichnet, dass** als Dicarbonsäure Terephthalsäure verwendet wird.

39. Verfahren nach mindestens einem der Ansprüche 22 bis 38,
**dadurch gekennzeichnet, dass** als Dicarbonsäureester Dimethylterephthalat (DMT) verwendet wird.

40. Verfahren nach mindestens einem der Ansprüche 22 bis 39,
**dadurch gekennzeichnet, dass** als Katalysatoren Antimon-, Germanium-, Zinn- und/oder Titanmetall oder organische Verbindungen hiervon, auch in poröser Trägersubstanz oder als Nanopartikel, verwendet werden.

## Claims

1. Device for the continuous production of high-molecular polyester by esterification of dicarboxylic acids and/or transesterification of dicarboxylic acid esters with diols and/or mixtures thereof in the presence of catalysts comprising at least one tower reactor for the production of a prepolymer and a polymerisation reactor which forms an end reactor,
**characterised in that** the tower reactor (35) is constructed as follows:
- the tower reactor is configured in the lower third in the form of a hydrocyclone (40) with a suspended heat exchanger (36) and has a supply line for the paste, slurry and/or the liquid raw material mixture and also a static reaction mixer below the heat exchanger,
- the hydrocyclone (40) is connected via a pressure line (37) to the top side of the tower reactor (35),
- the top side of the tower reactor (35) is configured in the upper third in the form of a falling-film cascade (42),
- the cascade (42) is in communication via a line with the middle part of the tower reactor and is configured in the form of a single or multi-step falling-film zone (43) with prepressure reduction, wherein the falling-film zones (43) comprise falling-film pipes (48) which have a filling comprising structured packing, filling materials, expanded metal and/or conducting spirals,
the end reactor (25) has a rotor which rotates in a reactor housing (1), which has an inlet and outlet (31, 32), and is mounted horizontally via a mounting device (4) by means of stub shaft arrangements which extend beyond the end walls of the reactor housing (1) and **in that** annular film-forming elements (8) are disposed on the rotor and strippers are disposed between the annular film-forming elements (8) on the inner surfaces of the reactor housing, wherein the cylindrical rotor has an at least partially heated portion.

2. Device according to claim 1,
**characterised in that** a heated portion is provided in the direction of the outlet (32) and an unheated portion in the direction of the inlet (31).

3. Device according to claim 1 or 2,
**characterised in that** the unheated portion of the cylindrical rotor is configured as a perforated basket frame (6) and the heated portion as a closed frame (7).

4. Device according to at least one of the claims 1 to 3,
**characterised in that** the ratio of perforated frame diameter to the reaction chamber diameter is between 0.5 and 0.6 and the ratio of the closed frame to the reaction chamber is 0.65 to 0.75.

5. Device according to at least one of the claims 1 to 4,
**characterised in that** the L/D ratio (length ratio (L) to diameter ratio (D)) of the reaction chamber is 1 to 3.5, preferably 1.5 to 3.0, particularly preferred 2.5 to 3.

6. Device according to at least one of the claims 3 to 5,
**characterised in that** the closed frame (7) has a heatable double jacket (23).

7. Device according to at least one of the claims 3 to 6,
**characterised in that** the transition from the perforated basket frame (6) to the closed frame (7) is configured as a cone (22).

8. Device according to at least one of the claims 1 to 7,
**characterised in that** one to two thirds of the horizontally disposed rotor, with respect to the horizontal extension, is formed by the heated portion which is disposed on the outlet side.

9. Device according to at least one of the claims 1 to 8,
**characterised in that** the strippers (11) are disposed only in the unheated portion and conveyer strippers (13) in the heated portion.

10. Device according to claim 9,
**characterised in that** the conveyer strippers (13) are disposed radially offset relative to the strippers (11) which are disposed in the region of the unheated portion.

11. Device according to claim 9 or 10,
**characterised in that** counter-strippers (14) are provided in the region of the heated portion opposite the conveyer stripper (13).

12. Device according to at least one of the claims 9 to 11,
**characterised in that** the conveyer strippers (13) and/or the counter-strippers (14) have a triangular configuration.

13. Device according to at least one of the claims 1 to 12,
**characterised in that** the annular film-forming elements (8) are formed by a tubular crown (28) and by a net-like metallic pipe structure (12) which is clamped between the tubular crown (28) and the rotor surface.

14. Device according to claim 13,
**characterised in that** the net-like metallic structure forms lozenge-shaped and/or triangular openings.

15. Device according to at least one of the claims 1 to 14,
**characterised in that** the discharge pump (19) is disposed directly on the reactor housing (1).

16. Device according to claim 15,
**characterised in that** film-forming rings and recirculating strippers are provided above a rectangular pump suction flange.

17. Reactor device according to at least one of the claims 1 to 16,
**characterised in that** the reactor housing (1) has a heatable double jacket (2).

18. Reactor device according to at least one of the claims 3 to 17,
**characterised in that** an end cover displacer (16) is provided at the outlet-side end of the closed frame (7).

19. Device according to at least one of the claims 3 to 18,
**characterised in that** a seal (21) which comprises resilient blades is provided between the housing end cover (5) and the heated basket frame (7) with inert gas purging.

20. Device according to at least one of the claims 1 to 19,
**characterised in that** 1 or 2 vapour pipes (17) are provided for the reaction gases and are connected by means of a cone at a surface ratio of 2 to 3 : 1.

21. Device according to claim 20,
**characterised in that** the vapour pipes (17) are disposed at an angle of 0 to 30° out of the vertical container axis.

22. Method for the continuous production of high-molecular polyesters by esterification of dicarboxylic acids and/or transesterification of dicarboxylic acid esters with diols and/or mixtures thereof in the presence of catalysts with formation of a prepolymer with a device according to at least one of the claims 1 to 21,
**characterised in that** a prepolymer with > 40 to 70 repeat units (DP) is produced in the tower reactor and this prepolymer is polycondensed in only one further reactor to form a polyester with > 150 to 205 DP.

23. Method according to claim 22,
**characterised in that** a prepolymer with 45 to 65 DP, preferably with 50 to 60 DP, is produced.

24. Method according to claim 22 or 23,
**characterised in that** a prepolymer is produced which has a di- diol content of 0.6 to 0.9% by weight.

25. Method according to at least one of the claims 22 to 24,
**characterised in that** a prepolymer is produced, which has 20 to 40 meq/kg COOH end groups and 60 - 120 meq/kg OH end groups.

26. Method according to at least one of the claims 22 to 25,
**characterised in that** a prepolymer is produced, which has a low-boiling fraction < 10 ppm.

27. Method according to at least one of the claims 22 to 26,
**characterised in that** the process takes place during the prepolymerisation in the tower reactor at temperatures of 5 to 20°C above the melting point of the respective intermediate products.

28. Method according to at least one of the claims 22 to 27,
**characterised in that** a total reaction time of at most 3 hours, preferably 2.6 hours, is maintained up to and including the prepolycondensation.

29. Method according to at least one of the claims 22 to 28,
**characterised in that** the process takes place with a tower reactor, the falling-film pipes of which have a filling comprising structured packing, filling materials, expanded metal and/or conducting spirals.

30. Method according to at least one of the claims 22 to 29,
**characterised in that** a polyester with > 150 to 200 DP, preferably > 150 to 180 DP, is produced.

31. Method according to at least one of the claims 22 to 30,
**characterised in that** an end reactor is used which has a horizontally rotating basket rotor in a reactor housing with an inlet and outlet, the rotor having at least one partially heated/cooled portion.

32. Method according to claim 31,
**characterised in that** the process takes place essentially without a sump, i.e. **in that** the transport of the melt to the surface-forming pipe rings is effected with joint effect of transporting strippers.

33. Method according to at least one of the claims 22 to 32,
**characterised in that** the melt is treated in the discharge region of the polycondensation in the end reactor at a temperature of 5 to 20°C above the melting point in a gas chamber at reduced pressure.

34. Method according to claim 33,
**characterised in that** the melt from the polycondensation is discharged via a melt line and granulated preferably for 1 to 2 minutes.

35. Method according to claim 33or 34,
**characterised in that** the granulate is produced by hot cutting and further treated whilst maintaining the temperature of the granulate required for the crystallisation and drying and also whilst degassing by diffusion with the help of a carrier gas (air or inert gas) at a temperature between 150 and at most 180°C.

36. Method according to one of the claims 33 to 35,
**characterised in that** an end product is produced, which has a proportion of < 1 ppm of diffusible low-boiling components, a crystal proportion of 30 to 45% and equipped with a crystallite form which corresponds to the treatment temperature and a configuration value of the gauche and trans-structures in the Gaussian distribution but the outer spherical casing of a granulate particle has an increased trans-structure, i.e. orientation.

37. Method according to at least one of the claims 22 to 36,
**characterised in that** 1-ethane diol is used as diol.

38. Method according to one of the claims 22 to 37,
**characterised in that** terephthalic acid is used as dicarboxylic acid.

39. Method according to at least one of the claims 22 to 38,
**characterised in that** dimethylterephthalate (DMT) is used as dicarboxylic acid ester.

40. Method according to at least one of the claims 22 to 39,
**characterised in that** antimony, germanium, tin and/or titanium metal or organic compounds hereof, also in a porous carrier substance or as nanoparticles, are used as catalysts.

## Revendications

1. Dispositif pour la production continue de polyester de masse moléculaire élevée, par estérification d'acides dicarboxyliques et/ou transestérification d'esters d'acides dicarboxyliques avec des diols et/ou de mélanges de ceux-ci, en présence de catalyseurs, comprenant au moins un réacteur vertical destiné à la préparation d'un prépolymère et un réacteur de polymérisation constituant un réacteur final, **caractérisé en ce que** le réacteur vertical (35) a la constitution suivante :
- dans le tiers inférieur le réacteur vertical est conçu en forme d'un hydrocyclone (40) avec échangeur thermique (36) annexé et comporte un conduit d'alimentation pour la pâte, la suspension et/ou le mélange liquide de matières premières ainsi qu'un mélangeur statique au-dessous de l'échangeur thermique,
- l'hydrocyclone (40) est relié par un conduit sous pression (37) à la partie supérieure du réacteur vertical (35),
- la partie supérieure du réacteur vertical (35) est conçue dans le tiers supérieur en forme d'une cascade à flux descendant (42),
- la cascade (42) est en communication par un conduit avec la partie médiane du réacteur vertical, qui est conçue en forme d'une zone à film descendant (43) en un ou plusieurs étages, à détente incomplète, les zones à film descendant (43) comprenant des tubes à film descendant (48) qui comportent un remplissage par un garnissage texturé, des éléments de garnissage, un métal étiré et/ou des serpentins-guides, **en ce que** le réacteur final (25) comporte un rotor tournant dans une enceinte de réacteur (1) comportant une entrée et une sortie (31, 32), qui est placé horizontalement sur un dispositif de support (4) au moyen de pivots latéraux dépassant les parois frontales de l'enceinte (1) du réacteur et **en ce que** des éléments filmogènes annulaires (8) sont disposés sur le rotor et des racles sont disposées entre les éléments filmogènes annulaires (8) sur les faces internes de l'enceinte du réacteur, et le rotor cylindrique présente un segment au moins partiellement chauffé.

2. Dispositif selon la revendication 1, **caractérisé en ce qu'**un segment chauffé est prévu en direction de la sortie (32) et un segment non chauffé est prévu en direction de l'entrée (31).

3. Dispositif selon la revendication 1 ou 2, **caractérisé en ce que** le segment non chauffé du rotor cylindrique est conçu sous forme de châssis perforé en panier (6) et le segment chauffé est conçu en forme de châssis fermé (7).

4. Dispositif selon au moins l'une des revendications 1 à 3, **caractérisé en ce que** le rapport du diamètre du châssis perforé au diamètre de la chambre de réaction est compris entre 0,5 et 0,6 et le rapport du châssis fermé à la chambre de réaction va de 0,65 à 0,75.

5. Dispositif selon au moins l'une des revendications 1 à 4, **caractérisé en ce que** le rapport L/D [rapport de la longueur (L) au rapport du diamètre (D) de la chambre de réaction va de 1 à 3,5, de préférence de 1,5 à 3,0, de façon particulièrement préférée de 2,5 à 3.

6. Dispositif selon au moins l'une des revendications 3 à 5, **caractérisé en ce que** le châssis fermé (7) comporte une double enveloppe (23) pouvant être chauffée.

7. Dispositif selon au moins l'une des revendications 3 à 6, **caractérisé en ce que** le passage du châssis perforé en panier (6) au châssis fermé (7) est réalisé en forme de cône (22).

8. Dispositif selon au moins l'une des revendications 1 à 7, **caractérisé en ce que,** concernant l'extension horizontale, un à trois tiers du rotor disposé horizontalement est/sont constitué(s) par le segment chauffé placé du côté de la sortie.

9. Dispositif selon au moins l'une des revendications 1 à 8, **caractérisé en ce que** les racles d'extraction (11) sont disposées seulement dans le segment non chauffé et les racles de transport (13) sont disposées seulement dans le segment chauffé.

10. Dispositif selon la revendication 9, **caractérisé en ce que** les racles de transport (13) sont disposées en étant décalées radialement par rapport aux racles d'extraction (11) disposées dans la zone du segment non chauffé.

11. Dispositif selon la revendication 9 ou 10, **caractérisé en ce que** des contre-racles (14) opposées à la racle de transport (13) sont prévues dans la zone du segment chauffé.

12. Dispositif selon au moins l'une des revendications 9 à 11, **caractérisé en ce que** les racles de transport (13) et/ou les contre-racles (14) sont de forme triangulaire.

13. Dispositif selon au moins l'une des revendications 1 à 12, **caractérisé en ce que** l'élément filmogène annulaire (8) est constitué par une couronne tubulaire (28) et une structure tubulaire (12) métallique en forme de treillis tendue entre la couronne tubulaire (28) et la surface du rotor.

14. Dispositif selon la revendication 13, **caractérisé en ce que** la structure métallique en forme de treillis forme des ouvertures triangulaires et/ou en losanges.

15. Dispositif selon au moins l'une des revendications 1 à 14, **caractérisé en ce que** la pompe de décharge (19) est disposée directement sur l'enceinte de réacteur (1).

16. Dispositif selon la revendication 15, **caractérisé en ce que** des anneaux filmogènes et des racles rétro-transporteuses sont prévus au-dessus d'une bride aspirante rectangulaire de la pompe.

17. Dispositif de réacteurs selon au moins l'une des revendications 1 à 16, **caractérisé en ce que** l'enceinte de réacteur (1) comporte une double enveloppe (2) pouvant être chauffée.

18. Dispositif de réacteurs selon au moins l'une des revendications 3 à 17, **caractérisé en ce qu'**un corps de déplacement de couvercle d'extrémité (16) est prévu du côté de la sortie du châssis fermé (7).

19. Dispositif selon au moins l'une des revendications 3 à 18, **caractérisé en ce qu'**un joint hermétique (21) consistant en des lamelles à ressort, avec balayage avec un gaz inerte est prévu entre le couvercle (5) de l'enceinte et le châssis en panier (7) chauffé.

20. Dispositif selon au moins l'une des revendications 1 à 19, **caractérisé en ce que** 1 ou 2 conduits de vapeur (17) qui sont raccordés au moyen d'un cône ayant un rapport de surface de 2 à 3:1 sont prévus pour les gaz de réaction.

21. Dispositif selon la revendication 20, **caractérisé en ce que** les conduits de vapeur (17) sont disposés en faisant un angle de 0 à 30° avec l'axe vertical du récipient.

22. Procédé pour la production continue de polyesters de masse moléculaire élevée, par estérification d'acides dicarboxyliques et/ou transestérification d'esters d'acides dicarboxyliques avec des diols et/ou de mélanges de ceux-ci, en présence de catalyseurs, avec formation d'un prépolymère à l'aide d'un dispositif selon au moins l'une des revendications 1 à 21, **caractérisé en ce qu'**un prépolymère comportant > 40 à 70 motifs répétitifs (DP) est préparé dans le réacteur vertical et ce prépolymère est polycondensé dans seulement un autre réacteur, en un polyester comportant > 150 à 205 DP.

23. Procédé selon la revendication 22, **caractérisé en ce qu'**on prépare un prépolymère comportant 45-65 DP, de préférence comportant 50-60 DP.

24. Procédé selon la revendication 22 ou 23, **caractérisé en ce qu'**on prépare un prépolymère qui présente une teneur en di-diols de 0,6 à 0,9 % en poids.

25. Procédé selon au moins l'une des revendications 22 à 24, **caractérisé en ce qu'**on prépare un prépolymère qui comporte de 20 à 40 mEq/kg de groupes COOH en bout de chaîne et de 60 à 120 mEq/kg de groupes OH en bout de chaîne.

26. Procédé selon au moins l'une des revendications 22 à 25, **caractérisé en ce qu'**on prépare un prépolymère qui présente une teneur en composés à bas point d'ébullition < 10 ppm.

27. Procédé selon au moins l'une des revendications 22 à 26, **caractérisé en ce que** dans la prépolymérisation dans le réacteur vertical on opère à des températures de 5 à 20 °C au-dessus du point de fusion des produits intermédiaires respectifs.

28. Procédé selon au moins l'une des revendications 22 à 27, **caractérisé en ce que** jusqu'à la prépolycondensation incluse on maintient un temps de réaction total d'au maximum 3 heures, de préférence 2,6 heures.

29. Procédé selon au moins l'une des revendications 22 à 28, **caractérisé en ce qu'**on opère avec un réacteur vertical dont les tubes à film descendant comportent un remplissage de garnissage texturé, corps de remplissage, métal étiré et/ou serpentins guides.

30. Procédé selon au moins l'une des revendications 22 à 29, **caractérisé en ce qu'**on produit un polyester comportant > 150 à 200 DP, de préférence > 150 à 180 DP.

31. Procédé selon au moins l'une des revendications 22 à 30, **caractérisé en ce qu'**on utilise un réacteur final qui comporte un rotor en panier tournant horizontalement dans une enceinte de réacteur avec entrée et sortie, le rotor comportant au moins un segment en partie chauffé/refroidi.

32. Procédé selon la revendication 31, **caractérisé en ce qu'**on opère pratiquement sans résidu, c'est-à-dire que le transport de la masse fondue sur les anneaux tubulaires constituant la surface s'effectue avec l'action concourante de racles de transport.

33. Procédé selon au moins l'une des revendications 22 à 32, **caractérisé en ce que** la masse fondue dans la zone de décharge de la polycondensation dans le réacteur final est traitée à une température de 5 à 20 °C au-dessus du point de fusion dans un espace gazeux sous pression réduite.

34. Procédé selon la revendication 33, **caractérisé en ce que** la masse fondue provenant de la polycondensation est déchargée par un conduit de masse fondue et granulée de préférence pendant 1 à 2 minutes.

35. Procédé selon la revendication 33 ou 34, **caractérisé en ce** le produit granulé est obtenu par démoulage à chaud et est encore traité en maintenant la température du produit granulé qui est requise pour la cristallisation et le séchage ainsi qu'avec un dégazage par diffusion à l'aide d'un gaz vecteur (air ou gaz inerte) à une température comprise entre 150 et 180 °C au maximum.

36. Procédé selon l'une des revendications 33 à 35, **caractérisé en ce qu'**on obtient un produit final qui présente une teneur de < 1 ppm en composés diffusibles à bas point d'ébullition, une teneur en cristaux de 30 à 45 % et est configuré avec une forme de cristallite et taille de formation des structures gauche et trans dans la distribution de Gauss qui correspondent à la température de traitement, mais l'enveloppe sphérique externe d'un grain du produit granulé présente une structure trans accrue, c'est-à-dire une orientation.

37. Procédé selon au moins l'une des revendications 22 à 36, **caractérisé en ce qu'**on utilise comme diol du 1-éthanediol.

38. Procédé selon au moins l'une des revendications 22 à 37, **caractérisé en ce qu'**on utilise comme acide dicarboxylique de l'acide téréphtalique.

39. Procédé selon l'une des revendications 22 à 38, **caractérisé en ce qu'**on utilise comme ester d'acide dicarboxylique du téréphtalate de diméthyle (DMT).

40. Procédé selon au moins l'une des revendications 22 à 39, **caractérisé en ce qu'**on utilise en tant que catalyseurs le métal ou les métaux antimoine, germanium, étain et/ou titane ou des composés organiques de ceux-ci, également dans une matière poreuse de support ou sous forme de nanoparticules.
